# EUROPEAN PATENT APPLICATION

(11) **EP 3 926 568 A1**
(43) Date of publication of application: **22.12.2021**
(21) Application number: 20203305.6
(22) Date of filing: 22.10.2020
(51) Int. Cl.: G06Q 30/00

(54) **APPRAISAL AND AUTHENTICATION SYSTEM**

(30) Priority: 15.06.2020 JP 2020103179
(71) Applicant: CRYPTOMALL OÜ, 10152 Tallinn, Harju maakond (EE)
(72) Inventor: Kumagai, Emi, 10117 Tallinn, Harju maakond (EE)
(74) Representative: Hoffmann Eitle

(57) **Abstract**

The system includes linking a guarantee card to an appraisal required product such as a bag, a case, a garment, a watch, an artistic craft, or an automobile, and writing product information and transaction information to the block chain data of the dedicated platform, so that a user who has purchased the new or used appraisal required product can perform highly reliable appraisal and authentication.

## Description

### BACKGROUND

### Technical Field

The present invention relates to an appraisal and authentication system for a product, such as a bag, a case, a garment, a watch, an artistic craft, or an automobile, that requires appraisal and authentication (hereinafter, also referred to as an "appraisal required product").

### Related Art

The appraisal required products such as a bag, a case, a garment, a watch, an artistic craft, and an automobile move through complicated distribution channels in which they are usually manufactured by a manufacturing company or a manufacturer (author), and then is sold to a user through distributors such as a logistics provider, a wholesaler, and a retailer, and appraisal and authentication, that is, proof that the product is genuine, not imitation, is required for the user. Further, in recent years, the above-mentioned products are often sold to users via the Internet, so that the need for appraisal and authentication of these products is increasing.

A certificate (hereinafter, also referred to as a "guarantee card") for certifying and guaranteeing that the product is a genuine product is usually issued to the appraisal required product. Information about the product, such as a brand name, a product number, a manufacturing company/manufacturer, a manufacturing place, and a date of manufacture of the product (hereinafter also referred to as "product information") is described in the guarantee card. However, in recent years, it has become possible to obtain only the guarantee card through the Internet or the like, and therefore the appraisal and authentication by the guarantee card is not sufficiently reliable.

JP 2001-357377 A discloses a method in which a medium, such as a plastic card, to which the IC chip that stores information is attached is used as a certificate, and the validity of a certificate is determined by comparing the information printed on the surface of the certificate with the information read from the memory of the IC chip. However, when applying the method disclosed in JP 2001-357377 A to the appraisal required product, it is possible to determine validity of the guarantee card itself because forgery is difficult, but only the product number that is stamped on the product can link this guarantee card to the product, so that appraisal and authentication cannot be performed enough.

Further, WO 2014/207890 A discloses a method in which an IC chip is attached to the product and the product information recorded in the IC chip can be read by a smartphone, a mobile phone, or the like. However, when reading the above product information by applying the method of WO 2014/207890 A to the appraisal required product, it is possible for a third party other than the distributors and the user of the appraisal required product to know the product information when a password is not set, and it is possible for the third party to acquire product information about whether the appraisal required product is genuine, whether the date of manufacture of the appraisal required product is new, and the like that the user does not want the third party to know. On the other hand, when a password is set, the password is unknown while the appraisal required product moves through a complicated distribution channel, and there is a high possibility that the appraisal and authentication cannot be performed when necessary.

In addition, JP 2020-35197 A discloses a method of providing a serial code to a product, reading the serial code with a serial code reader, and inquiring the product database to perform appraisal and authentication of the product. However, when the method disclosed in JP 2020-35197 A is applied to the appraisal required product, the problem same as that when the method disclosed in WO 2014/207890 A is applied occurs.

### SUMMARY

An object of the present invention is to provide an appraisal and authentication system that allows only a user who has purchased a new or used appraisal required product that is distributed through a complicated distribution channel or sold over the Internet to perform highly reliable appraisal and authentication.

Focusing on the fact that the appraisal required product and the guarantee card are usually distributed and sold together although the appraisal required product such as such as a bag, a case, a garment, a watch, an artistic craft, or an automobile is distributed through complicated distribution channels, or is sold through the internet, the applicants of the present invention have earnestly studied how only the user can easily perform highly reliable appraisal and authentication by linking the appraisal required product and the guarantee card and using the both to make the present invention.

Further, in the present invention, the manufacturing company/manufacturer and the distributor write product information and transaction information to the block chain data of the dedicated platform, so that it is possible to completely prevent the product information and the transaction information from being tampered, and the reliability of the appraisal and authentication is further enhanced.

The gist of the present invention is shown below.
(1) An appraisal and authentication system for a product, such as a bag, a case, a garment, a watch, an artistic craft, or an automobile, that requires appraisal and authentication, wherein the appraisal and authentication is performed using the product which a small recording medium (a₁) storing information including a secret key α₁ and product information is attached to or incorporated in, and a guarantee card which a small recording medium (b) storing information including a secret key β₁ and the product information is attached to or incorporated in, wherein the appraisal and authentication system including a dedicated platform that records, as a block chain data, each piece of information of product information of the product and transaction information at respective distribution stages until the product reaches a user, an application [A] used for a manufacturing company/manufacturer and a distributor to write the product information and the transaction information to the block chain data, and an application [B] used by the user to read the product information and the transaction information from the block chain data, wherein the manufacturing company/manufacturer and the distributor use the application [A] to write the product information and the transaction information to the block chain data, and the user uses the secret key α₁ assigned to the product and the secret key β₁ assigned to the guarantee card, and uses the application [B] to read the product information and the transaction information of the product from the block chain data to the perform appraisal and authentication of the product.
(2) The appraisal and authentication system according to (1), wherein authority to write the product information and the transaction information to the block chain data is given only to the manufacturing company/manufacturer or the distributor concerned with the product information and the transaction information.
(3) The appraisal and authentication system according to (1) or (2), wherein a block chain having a P2P network is used as the dedicated platform.
(4) The appraisal and authentication system according to any one of (1) to (3), wherein the application [A] and the application [B] are downloaded to a terminal such as a personal computer or a smartphone to run.
(5) The appraisal and authentication system according any one of (1) to (4), wherein the product information includes information about the product, such as a brand name, a product number, a manufacturing company/manufacturer, a manufacturing place, and a date of manufacture of the product.
(6) The appraisal and authentication system according to any one of (1) to (5), wherein n small recording media including the small recording medium (a₁) and including a small recording medium (a₂) storing information including a secret key α₂ to a small recording medium (aₙ) storing information including a secret key αₙ are attached to or incorporated in the product where n is an integer of 2 or more.
(7) The appraisal and authentication system according to any one of (1) to (6), wherein at least one of the small recording media (a₁) to (aₙ) and the small recording medium (b) has a GPS function.

The appraisal and authentication system of the present invention allows only a user who has purchased a new or used appraisal required product that is distributed through a complicated distribution channel or sold over the Internet to perform highly reliable appraisal and authentication.

Furthermore, in the appraisal and authentication system of the present invention, the manufacturing company/manufacturer and the distributors (a logistics provider, a wholesaler, a retailer, etc.) sequentially write the product information and the transaction information of the appraisal required product to block chain data of the dedicated platform, so that it is possible to accurately record the product information and the transaction information while complementing each other, and furthermore, it is possible to completely prevent the product information and the transaction information from being tampered. As a result, the reliability of the appraisal and authentication can be further enhanced.

### BRIEF DESCRIPTION OF DRAWINGS

FIG. 1 is a schematic diagram showing an appraisal required product and a guarantee card that is sold and distributed together with the product;
FIG. 2 is a schematic diagram showing an embodiment of an appraisal and authentication system of the present invention; and
FIG. 3 is a conceptual diagram of block chain data in which each piece of product information and transaction information is recorded in a dedicated platform in the appraisal and authentication system of the present invention.

### DETAILED DESCRIPTION

Hereinafter, the appraisal and authentication system of the present invention will be described in detail with reference to the drawings, but the present invention is not limited thereto.

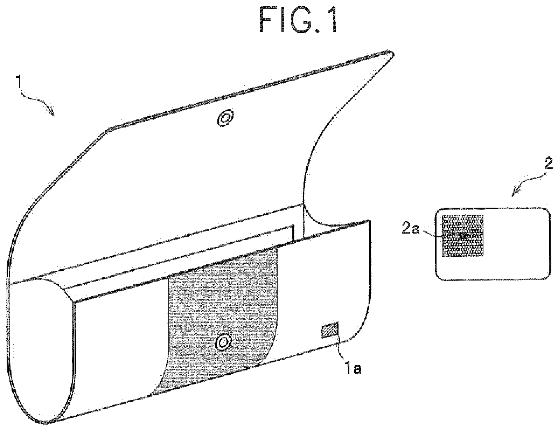

FIG. 1 is a schematic diagram showing an appraisal required product 1 which is handled by the appraisal and authentication system of the present invention, and which is distributed through a complicated distribution channel or is sold through the Internet, and a guarantee card 2 which is sold and distributed together with the appraisal required product 1. A small recording medium (a₁)1a storing information including a secret key α₁ and product information (a brand name, a product number, a manufacturing company/manufacturer, a manufacturing place, a date of manufacture, etc.) is attached to or incorporated in the appraisal required product 1, and a small recording medium (b)2a storing information including a secret key β₁ and the product information is attached to or incorporated in the guarantee card 2. As the small recording medium (a₁)1a and the small recording medium (b)2a, a small recording medium such as a microchip, a QR code, a digital watermark, etc. can be used as appropriate depending on the shape, structure, size, etc. of the appraisal required product 1 and the guarantee card 2.

As described in detail later, the product information of the small recording medium (a₁)1a of the appraisal required product 1 and the small recording medium (b)2a of the guarantee card 2 is input by the manufacturing company/manufacturer at the time of shipment of the appraisal required product 1.

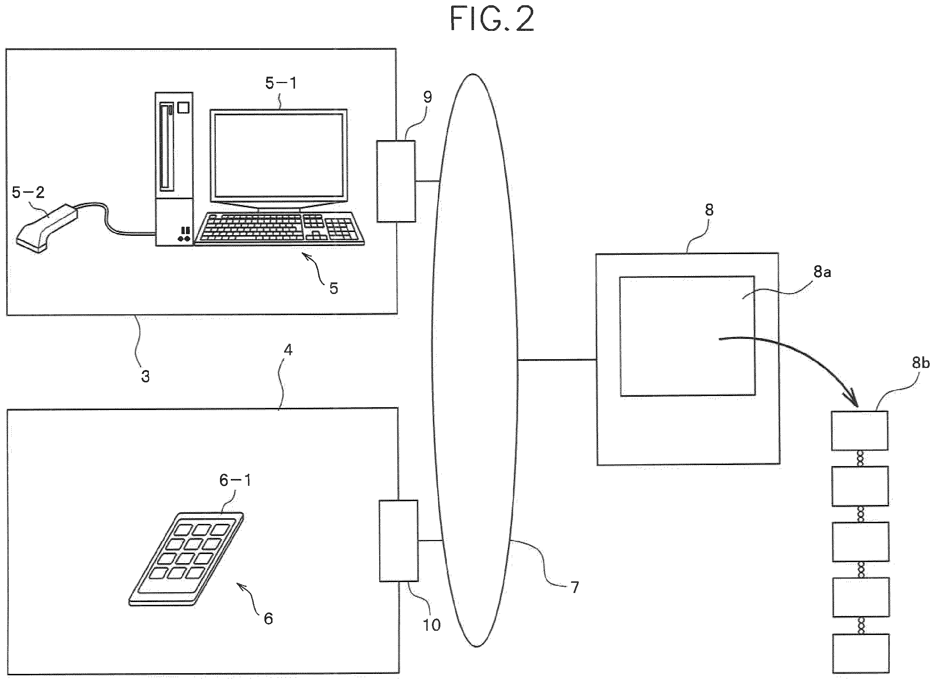

FIG. 2 is a schematic diagram showing an embodiment of the appraisal and authentication system of the present invention.

In this embodiment, the appraisal and authentication system includes a) a dedicated platform 8 that records, as block chain data 8b of the block chain 8a, each piece of information of product information of the appraisal required product 1 and transaction information at respective distribution stages until the appraisal required product 1 reaches the user, b) a terminal [A]5 connected to the dedicated platform 8 via the Internet environment 7 by an application [A]9, and c) a terminal [B]6 connected to the dedicated platform 8 via an Internet environment 7 by an application [B]10.

A manufacturing company/manufacturer and distributors (a logistics provider, a wholesaler, a retailer, etc.) 3 write product information and transaction information to the block chain data 8b of the dedicated platform 8 using the application [A]9. In this embodiment, to enable the manufacturing company/manufacturer and the distributor 3 to efficiently write product information and transaction information, the terminal [A]5 is a personal computer 5-1 including a reader 5-2, but another terminal such as a smartphone can also be used as appropriate.

A user 4 can use the application [B]10 and use the secret key α₁ assigned to the appraisal required product and authentication 1, and the secret key β₁ assigned to the guarantee card 2 to read the product information and the transaction information of the appraisal required product 1 written to the block chain data 8b of the dedicated platform 8. This allows the user to easily perform highly reliable appraisal and authentication. In this embodiment, the terminal [B]6 is a smartphone 6-1 so that the user 4 can easily read the product information and the transaction information of the appraisal required product 1 written to the block chain data 8b, but another terminal such as a personal computer can also be used as appropriate.

The application [A]9 is downloaded to the terminal [A]5 and runs. With this, the manufacturing company/manufacturer and the distributors (a logistics provider, a wholesaler, a retailer, etc.) 3 can write the product information and the transaction information to the block chain data 8b of the dedicated platform 8. The application [B]10 is downloaded to the terminal [B]6 and runs, and the user 4 can read the product information and the transaction information of the appraisal required product 1 written to the block chain data 8b of the dedicated platform 8.

As shown in FIG. 2, information including the secret key α₁ and product information recorded in the small recording medium (a₁)1a of the appraisal required product 1 and the information including the secret key β₁ and the product information recorded in the small recording medium (b)2a of the guarantee card 2 can be read by contacting the reader 5-2 of the personal computer 5-1 or the smartphone 6-1 as well as by contactless communication by near field communication such as near field communication (NFC) and radio frequency identicifier (RFID).

A block chain having the P2P network such as a distributed ledger can be used as the block chain 8a.

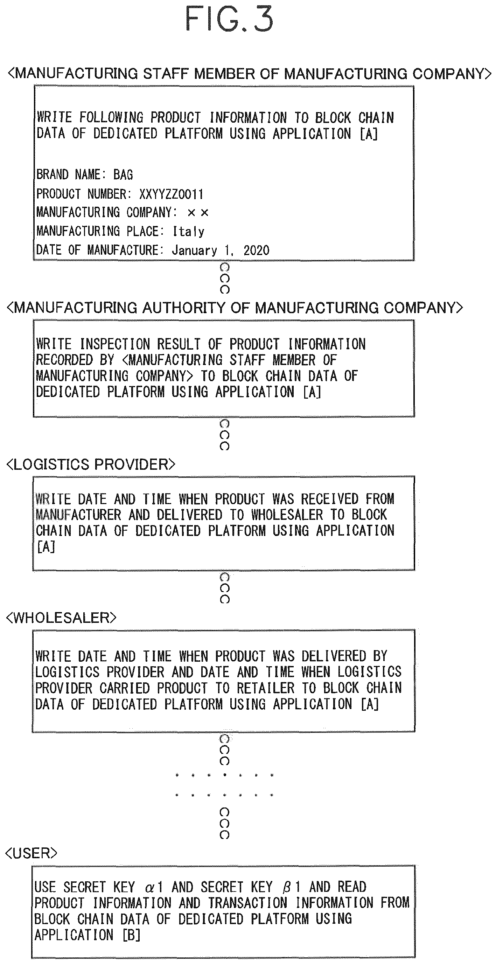

FIG. 3 is a conceptual diagram of the block chain data 8b in which each piece of information of product information and transaction information recorded in the dedicated platform 8 for the appraisal required product 1 manufactured by the manufacturing company/manufacturer in the appraisal and authentication system of the present invention.

With reference to FIG. 3, the situation in which the manufacturing company/manufacturer and the distributors (a logistics provider, a wholesaler, a retailer, etc.) 3 use the terminal [A]5 to write product information and transaction information to the block chain data 8B of the dedicated platform 8 will be described.

The appraisal required product 1 (the bag manufactured by the manufacturing company is shown as an example of the appraisal required product 1 in FIG. 3) is shipped with the guarantee card 2 set after being manufactured by the manufacturing company. At the time of shipment, first, <manufacturing staff member of the manufacturing company> uses the application [A]9 to write information including the following product information and 5W1H information (who, when, where, what, why, how) to the block chain data 8b of the dedicated platform 8.
Brand Name: bag
Product Number: XXYYZZ0011
Manufacturing Company: ××
Manufacturing Place: Italy
Date Of Manufacture: January 1, 2020

Next, <manufacturing authority of the manufacturing company> uses the application [A]9 to write information including the 5W1H information, which is the inspection result of the product information recorded by <manufacturing staff member of the manufacturing company>, to the block chain data 8b of the dedicated platform 8.

After the appraisal required product 1 is shipped from the manufacturing company, <logistics provider> uses the application [A]9 to write information including the 5W1H information such as the date and time when the product was received from the manufacturing company, and the date and time when the product was delivered to the wholesaler to the block chain data 8b of the dedicated platform 8.

After the appraisal required product 1 is received from the manufacturing company, <wholesaler> uses application [A]9 to write information including the 5W1H information such as the date and time when the product is delivered from the logistics provider, and the date and time when the logistics provider transports the product to the retailer to the block chain data 8b of the dedicated platform 8.

In this way, the product information and the transaction information of the manufacturing company and the distributors (a logistics provider, a wholesaler, a retailer, etc.) 3 are sequentially written to the block chain data 8b of the dedicated platform 8.

In FIG. 3, as the appraisal required product 1, the example of a bag that is manufactured in a relatively large amount by the manufacturing company is explained. Similarly, for an artistic craft manufactured by a manufacturer (author) in a relatively small amount, each piece of information of product information and transaction information can be recorded in the dedicated platform 8 as the block chain data 8b.

The authority to write product information and transaction information to the block chain data 8b is given only to the manufacturing company/manufacturer and the distributor concerned with this information. For example, the manufacturing company/manufacturer is given only the authority to write product information.

In this way, since the manufacturing company/manufacturer and distributors (a logistics provider, a wholesaler, a retailer, etc.) 3 sequentially write product information and transaction information of the appraisal required product 1, it is possible to accurately record product information and transaction information of the appraisal required product 1 even though the appraisal required product 1 is distributed through a complicated distribution channel, or is sold through the Internet.

Furthermore, by writing product information and transaction information to the block chain data 8b of the dedicated platform 8, it is possible to completely prevent the product information and the transaction information from being tampered. That is, each block in the block chain data 8b includes a time stamp and a link (hash value) to the previous block, and the data in the block cannot be changed retrospectively.

The user 4 who purchased the new or used appraisal required product 1 can use the terminal [B]6 to use the secret key α₁ assigned to the appraisal required product 1 and the secret key β₁ assigned to the guarantee card 2, and can use the application [B]10 to read the product information and the transaction information of the appraisal required product 1 written to the block chain data 8b of the dedicated platform 8. As a result, only a true user who owns the appraisal required product 1 and the guarantee card 2 can easily perform highly reliable appraisal and authentication.

As described above, the appraisal and authentication system of the present invention allows the user who has purchased a new or used appraisal required product that is distributed through a complicated distribution channel or sold over the internet to perform highly reliable appraisal and authentication.

Furthermore, in the appraisal and authentication system of the present invention, the manufacturing company/manufacturer and the distributors (a logistics provider, a wholesaler, a retailer, etc.) sequentially write the product information and the transaction information of the appraisal required product to block chain data of the dedicated platform, so that it is possible to accurately record the product information and the transaction information, and furthermore, it is possible to completely prevent the product information and the transaction information from being tampered. As a result, the reliability of the appraisal and authentication can be further enhanced.

Further, the appraisal and authentication system of the present invention uses the secret key α₁ assigned to the appraisal required product 1 and the secret key β₁ assigned to the guarantee card 2 to read the product information and the transaction information of the appraisal required product 1 written to the block chain data 8b of the dedicated platform 8, so that only the true user 4 who owns the appraisal required product 1 and the guarantee card 2 can perform appraisal and authentication.

In the appraisal and authentication system of the present invention, preferably, n small recording media including the small recording medium (a₁) and including a small recording medium (a₂) storing information including a secret key α₂ to a small recording medium (aₙ) storing information including a secret key αₙ can be attached to or incorporated in the appraisal required product 1 where n is an integer of 2 or more. As a result, the digital signature scheme in which the appraisal and authentication is established only when not only the secret key α₁ and the secret key β₁, but also all the secret keys α₂ to αₙ are available can be adopted, and the appraisal and authentication accuracy can be made more reliable. In addition, the n small recording media (a₁) to (aₙ) are attached to or incorporated in each part of the appraisal required product 1, so that even when some of the parts are replaced with imitation products, the imitation products can be detected. For example, when the appraisal required product 1 is an automobile, the small recording medium is attached to or incorporated in each of the vehicle body and the tires, so that the appraisal and authentication cannot be established unless all the parts are genuine products.

Further, in the appraisal and authentication system of the present invention, preferably, at least one of the small recording media (a₁) to (aₙ) and the small recording medium (b) can have a GPS function. As a result, even when each part of the appraisal required product 1 and the guarantee card are lost or stolen, it is possible to easily detect the location of them.

## Claims

1. An appraisal and authentication system for a product, such as a bag, a case, a garment, a watch, an artistic craft, or an automobile, that requires appraisal and authentication, wherein
the appraisal and authentication is performed using the product which a small recording medium (a₁) storing information including a secret key α₁ and product information is attached to or incorporated in, and a guarantee card which a small recording medium (b) storing information including a secret key β₁ and the product information is attached to or incorporated in,
the appraisal and authentication system comprising:
a dedicated platform that records, as a block chain data, each piece of information of product information of the product and transaction information at respective distribution stages until the product reaches a user;
an application [A] used for a manufacturing company/manufacturer and a distributor to write the product information and the transaction information to the block chain data; and
an application [B] used by the user to read the product information and the transaction information from the block chain data, wherein
the manufacturing company/manufacturer and the distributor use the application [A] to write the product information and the transaction information to the block chain data, and
the user uses the secret key α₁ assigned to the product and the secret key β₁ assigned to the guarantee card, and uses the application [B] to read the product information and the transaction information of the product from the block chain data to perform the appraisal and authentication of the product.

2. The appraisal and authentication system according to claim 1, wherein authority to write the product information and the transaction information to the block chain data is given only to the manufacturing company/manufacturer or the distributor concerned with the product information and the transaction information.

3. The appraisal and authentication system according to claim 1 or 2, wherein a block chain having a P2P network is used as the dedicated platform.

4. The appraisal and authentication system according to any one of claims 1 to 3, wherein the application [A] and the application [B] are downloaded to a terminal such as a personal computer or a smartphone to run.

5. The appraisal and authentication system according to any one of claims 1 to 4, wherein the product information includes information about the product, such as a brand name, a product number, a manufacturing company/manufacturer, a manufacturing place, and a date of manufacture of the product.

6. The appraisal and authentication system according to any one of claims 1 to 5, wherein n small recording media including the small recording medium (a₁) and including a small recording medium (a₂) storing information including a secret key α₂ to a small recording medium (aₙ) storing information including a secret key αₙ are attached to or incorporated in the product where n is an integer of 2 or more.

7. The appraisal and authentication system according to any one of claims 1 to 6, wherein at least one of the small recording media (a₁) to (aₙ) and the small recording medium (b) has a GPS function.
